Europäisches Patentamt

European Patent Office

Office européen des brevets

(11) Publication number: **0 276 728**
A2

## (12) EUROPEAN PATENT APPLICATION

(21) Application number: 88100706.6

(22) Date of filing: 19.01.88

(51) Int. Cl.⁴: **B60K 31/00** , G05D 13/62

(30) Priority: 19.01.87 JP 9335/87

(43) Date of publication of application:
03.08.88 Bulletin 88/31

(84) Designated Contracting States:
DE GB

(71) Applicant: Matsushita Electric Industrial Co.,
Ltd.
1006, Oaza Kadoma
Kadoma-shi Osaka-fu, 571(JP)

(72) Inventor: Nakano, Shigeru
2-22, Nozaki 4-chome
Daitoh City, 574(JP)
Inventor: Kondo, Yasuhiro
11-1, Nagao-Nishimachi 1-chome
Hirakata City,573-01(JP)

(74) Representative: Dr. Elisabeth Jung Dr. Jürgen
Schirdewahn Dipl.-Ing. Claus Gernhardt et al
P.O. Box 40 14 68 Clemensstrasse 30
D-8000 München 40(DE)

(54) Automatic speed regulator for automobile.

(57) In an automatic speed regulation system for an automobile, besides the signal (ds) of the speed deviation from a selected set speed, a signal (ms) of the measured actual driving speed itself is inputted to a pulse width computing means (14); thereby more quick convergence to the set speed and less fluctuation of the speed are obtainable, and the comfortability of driving is much improved.

FIG.1

## Automatic speed regulator for automobile

### FIELD OF THE INVENTION AND RELATED ART STATEMENT

#### 1. FIELD OF THE INVENTION

The present invention relates to an automatic speed regulator system for automobile for providing automatically regulated selected speed for an automobile without continuous operation of throttle control pedal during driving.

### BACK GROUND OF THE INVENTION

Recently, the automatic speed regulator for automobile become popular among ordinary automobiles.

The automatic speed regulator for automobile generally provides a selected speed by handling a manual setting of a switch to set the automatic speed regulation operation when a vehile speed reaches a desired speed, followed by automatic comparing of measured speed with the set speed to issue comparison output and operating of the throttle valve to close when the measured speed is higher than the set speed and to open the same when the measured speed is lower than the set speed, thereby achieving control of the vehicle speed around the set target value. One prior art example is disclosed in the Japanese examined published patent application No. sho 61-45668, wherein the signal of speed difference from set speed and signal of acceleration are used as input signals for speed regulation apparatus, thereby the speed control is made only when the acceleration is within a predetermined value.

The above-mentioned conventional automatic speed regulator for automobile has the below-mentioned problems. First, since process of the speed control is complicated, the software required therefor becomes unduly large. Next, due to difference of engine characteristics, i.e., output power, torque, etc., differing responding to vehicle speed, and due to vehicle speed fluctuation depending on road surface conditions, winds, inclination or curvature of road, etc. the actual vehicle speed fluctuates increasing and decreasing the speed around the set speed. Therefore, the conventional automatic speed regulator results always in fluctuation of speed in driving, and furthermore has poor response speed characteristic in reaching the set speed. Therefore the conventional apparatus gives the drivers and passengers undesirable feelings.

### OBJECT AND SUMMARY OF THE INVENTION

In order to solve the above-mentioned problem, the present invention purposes to provide an improved automatic speed regulator for automobile capable of controlling vehicle speed without undesirable speed fluctuation and achieve quick response of speed control to the set speed, even at variation of road condition, variation of wind and variation of engine rotation speed, by adoption of improved processing of input signals responding to the vehicle speed.

In order to achieve the above-mentioned object, the automatic speed regulation system for automobile in accordance with the present invention comprises:

speed measuring means for measuring actual speed of the automobile to issue a measured speed signal,

speed setting means for setting a desired target speed to which the speed regulation is to be made,

speed deviation computing means for computing speed deviation which is difference between the measured speed and the target speed, to issue speed deviation signal,

pulse width computing means for computing pulse width in accordance with a numerical function whereto the speed deviation signal and the measured speed signal are given as variable,

a pulse generator for generating a pulse signal having the pulse width computed by the pulse width computing means, and

an actuator for moving throttle valve aperture by receiving and responding to the output pulse signal of the pulse generator.

As a result of adoption of the above-mentioned constitution, irrespective of variation of engine output, quick convergence to the set speed and minimized speed fluctuation from the set speed are achieved, by driving the throttle valve actuator by pulse signals having a given period and variable pulse width which is controlled by computation in accordance with a numerical function having actual vehicle speed, vehicle speed deviation from a set value and actual acceleration as variables.

Thus the automatic speed regulator of the present invention can provide an automatic control of more quick response of the speed regulation operation and smaller fluctuation of speed form the set speed in the automatic speed regulation driving, thereby affording stable feeling for the driver and passenger of the vehicle. Furthermore, automatic speed regulation process is more simplified than the prior art.

## BRIEF DESCRIPTION OF THE DRAWINGS

FIG. 1 is a circuit block diagram showing general constitution of a preferred embodiment of the present invention.

FIG. 2 is a more concrete circuit block diagram of the preferred embodiment.

FIG. 3 is a flow chart showing timer interruption operation of the control circuit 21 of the circuit of FIG. 2.

FIG. 4 is a flow chart showing main process operation of the control circuit 21 of FIG. 2.

FIG. 5 is a time chart showing timing relation between drive output and throttle valve aperture.

FIG. 6 is a graph showing a relation among constants A1, A2, A3 and A4 and actual vehicle speed and vehicle speed deviation.

FIG. 7 is a graph showing a relation among constants B1, B2, B3 and B4 and actual vehicle speed and acceleration of vehicle.

FIG. 8 is a time chart showing variation of vehicle speed in the conventional automatic speed regulator driving.

FIG. 9 is a time chart showing variation of vehicle speed of the embodiment of the present invention.

## DESCRIPTION OF THE PREFERRED EMBODIMENTS

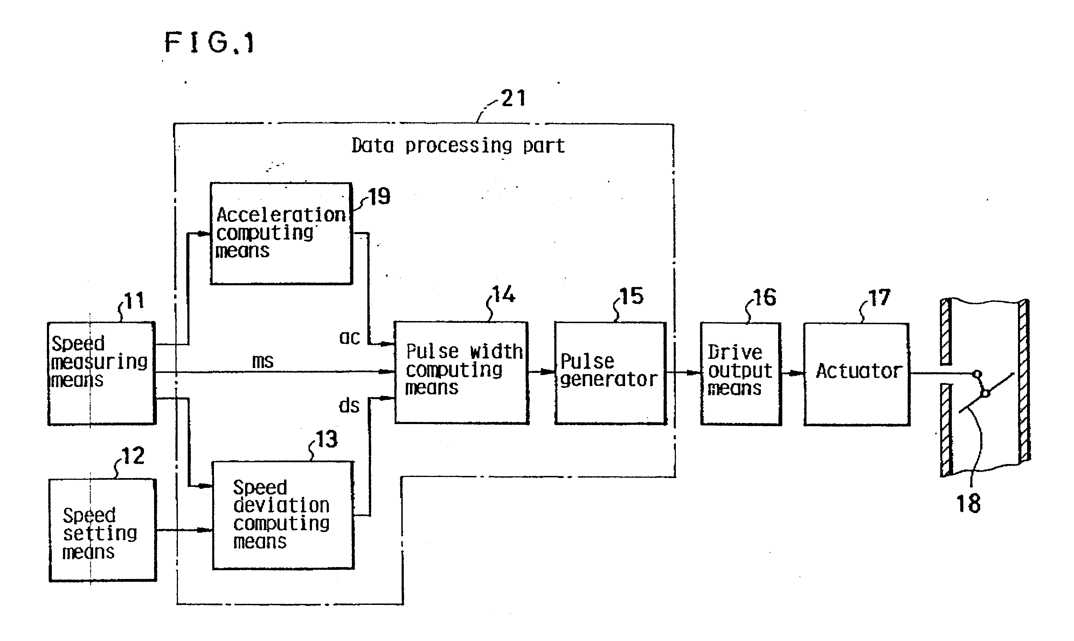

FIG. 1 shows circuit block diagram configuration of a preferred embodiment. The embodiment circuit comprises: A speed measuring means 11 which measures actual speed of the vehicle and issues measured speed signal corresponding to the measured speed; speed setting means 12 for setting desired target speed to which the speed regulation is to be made; speed deviation computating means 13 for computing deviation of measured vehicle speed from the set speed thereby to issue a speed deviation signal; acceleration computating means 19 for computing acceleration from the measured speed signal given by the speed measuring means 11 thereby to issue acceleration signal; pulse width computing means 14 for computing pulse width in accordance with a numerical function, by receiving three signals namely outputs of the speed deviation signal from the speed deviation computing means 13, the measured speed signal from the speed measuring means 11 and the acceleration signal from the acceleration computing means 19, the three signals being given as variables for the numerical function; a pulse generator 15 for generating a pulse signal having the pulse width computed by the pulse width computing means 14; drive output means 16 for amplifying the output pulse signal from the pulse generator 15 and issuing a drive output signal therefrom; and an actuator 17 for moving aperture of throttle valve 18 by receiving and responding to the output pulse signal of the pulse generator 15. The above-mentioned acceleration computing means 19, the speed deviation computing means 13, the pulse width computing means 14 and the pulse generator 15 constitutes a data processing part 21. And in the above-mentioned circuit configuration, the data processing part 21 can be made by a hard-ware circuits, wherein, the pulse width computing means 14 may be realized as a known analog processor, or alternatively as a digital data processor. such as a microprocessor.

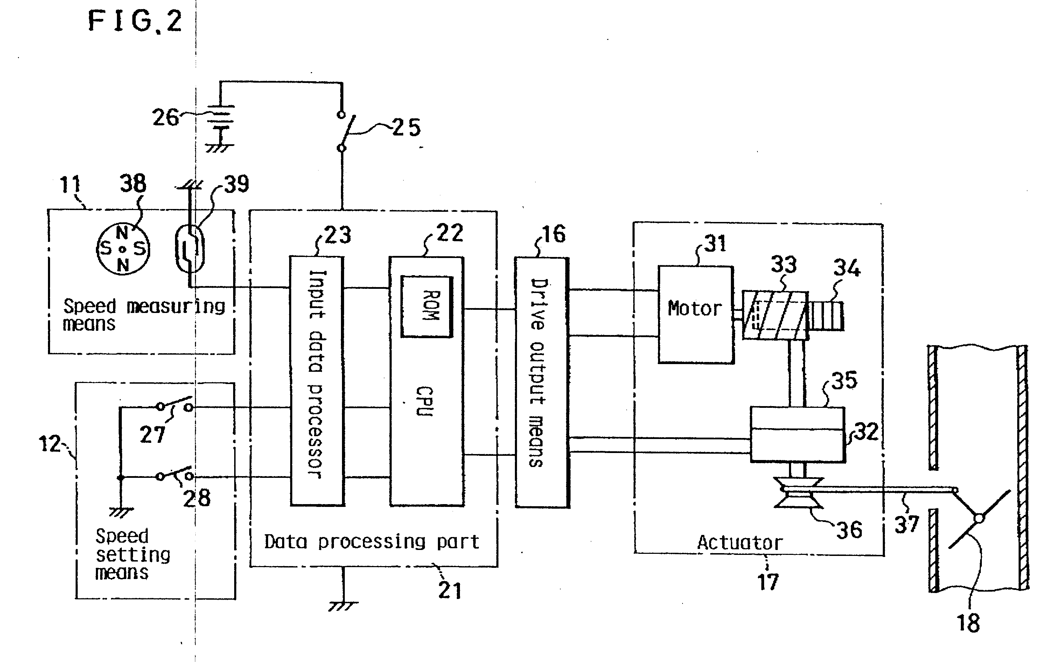

FIG. 2 shows more detailed circuit configuration of the embodiment, wherein the data processing part 21 is realized by a microprocessor.

The speed measuring means 11 comprises a magnetized rotor 38 connected to a wheel shaft of the automobile and a reed switch 39 provided to receive magnetic flux of the rotor 38, thereby to switch on and off four times per one rotation of the rotor 38.

The speed setting means 12 comprises a speed setting switch 27 for starting an automatic speed regulation driving and setting a desired speed at that time to the data processing part 21 and comprises a cancelling switch 28 for cancelling the automatic speed regulation driving set by the speed setting switch 27.

The signals from the reed switch 39, the speed setting switch 27 and the cancelling switch 28 are input to an input data processor 23 in the data processing part 21. The input data processor 23 makes digital data signal which is suitable for processing in a central processing unti 22 (hereinafter referred to as CPU 22) in the data processing part 21.

The CPU 22 processes to issue four signals to control throttle valve 18, namely (1) opening signal to increase aperture of the throttle valve 18. (2) closing signal to decrease aperture of the throttle valve 18, (3) immediate close signal to immediately close to complete close state of the throttle valve 18 and (4) retention signal to retain the aperture at that time; and either one of such four signals are issued as a result of data processing in the CPU 22 in accordance with a programme stored in a ROM therein.

The programme makes the CPU 22 performs a speed deviation computing step, which is identical to that made by the speed deviation computing means 13 of FIG. 1, an acceleration computing step, which is identical to that made by the acceleration computing means 19 of FIG. 1, a pulse width computation step, which is identical to that made by the pulse width computing means 14 of FIG. 1, and a pulse generation step, which is identical to that made by the pulse width generator 15. Thus, the data processing part 21 issues from its CPU 22 the signals to control the throttle valve 18.

The drive output means 16 is a power amplifier, which receives and amplifies the signals to control the throttle valve 18 given from the CPU 22, thereby to issue drive output signal of sufficient power to an actuator 17.

The acutator 17 comprises a motor 31, a worm gear 33 connected thereto, a worm wheel 34 coupled to the worm gear, a gear box 35 connected to a shaft of the worm wheel 34, an electromagnetic clutch 32, which is connected to an output shaft of the gear box 35 and controlled by a signal given by the drive output means 16, and a bobbin 36 connected to an output shaft of the electromagnetic clutch 32. And a cable 37 is provided to connect the throttle valve 18 to the bobbin 36.

The above-mentioned system is fed of electric power from a main battery 26 of the automobile through a main switch 25.

When the opening signal is issued from the CPU 22, the electromagnetic clutch 32 is energized by receiving a clutch connection current from the drive output means 16, and at the same time the motor 31 is driven to a first direction, thereby to move the cable 37 in a direction to increase the aperture (opening degree) of the throttle valve 18.

When the closing signal is issued from the CPU 22, the electromagnetic clutch 32 is also energized by receiving the clutch connection current from the drive output means 16, and at the same time the motor 31 is driven in a second direction, which is opposite to the first direction, thereby to move the cable 37 in a direction to decrease the aperture of the throttle valve 18.

When the immediate close signal is issued from the CPU 22, the drive output means 16 immediately cuts out the clutch connection current thereby disconnecting the clutch 32 from a clutch disc in the gear box 35 and the bobbin 36 from the gear box 35. Thereby, by means of a known restoration spring (not shown) of the throttle valve linkage, the throttle valve 18 is immediately closed.

When a retention signal is issued, a clutch connection signal only is issued from the drive output means 16, thereby connecting the bobbin 36 through the electromagnetic clutch 32 and the gear box 35 to the worm wheel 34 which is in resting state. Thus a function of stopping the bobbin 36 is given thereby to retain the aperture at that time against the restoration spring.

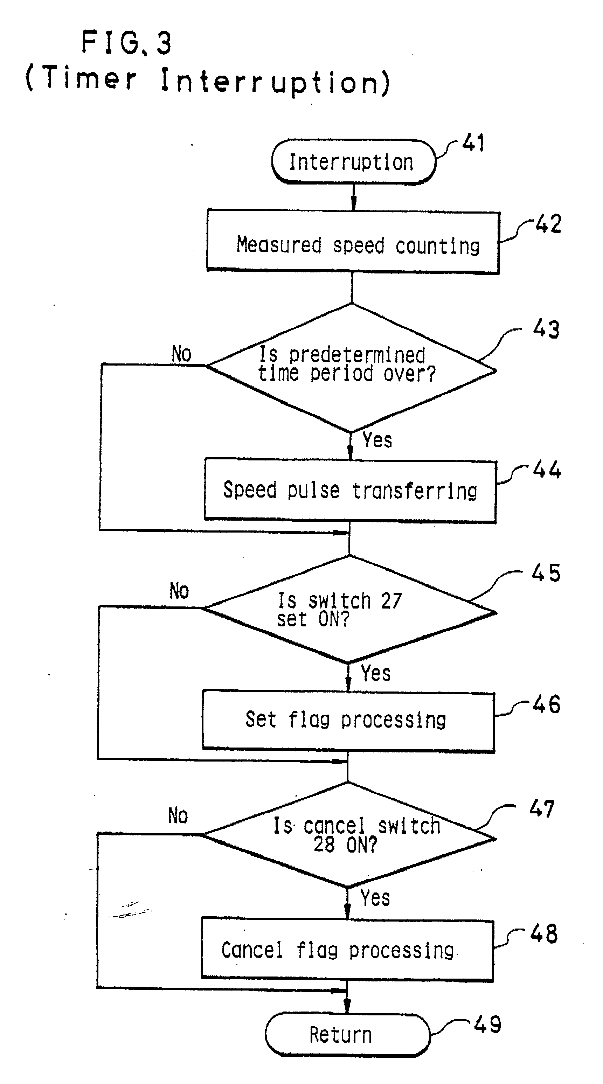

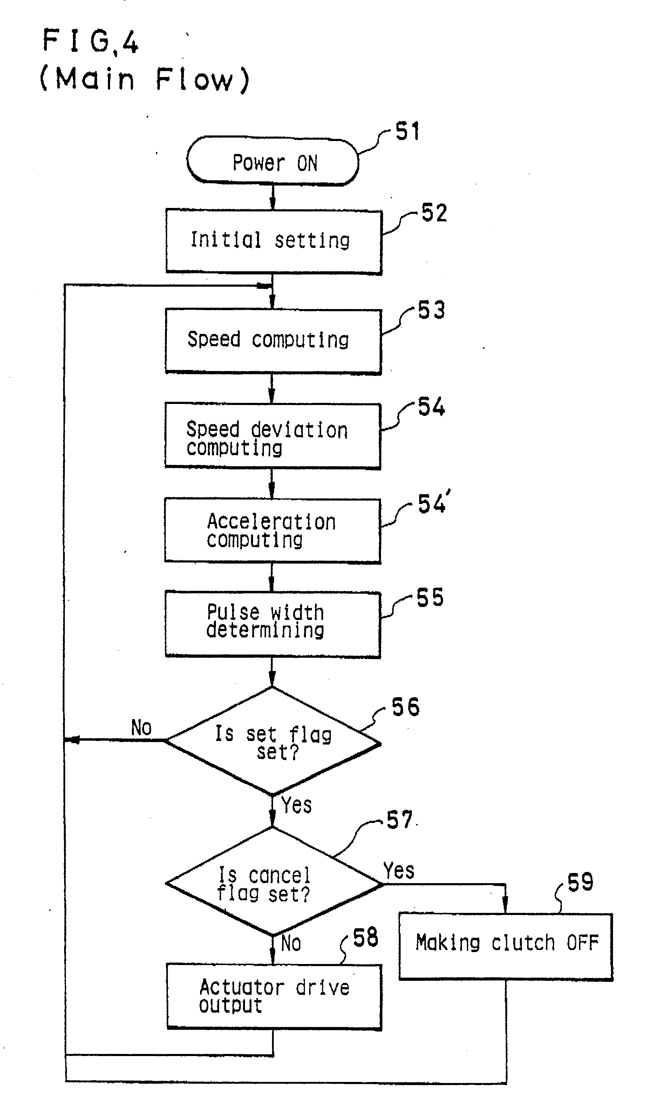

FIG. 3 and FIG. 4 show flow-charts showing operation of the data processing part 21, wherein FIG. 3 shows a timer interruption processing part and FIG. 4 shows a main processing part.

The operation of the timer interruption operation starts by a timer interrupting of the microprocessor of the data processing part 21.

First, an initiation step 41 is made by the timer interruption. Then when the speed measuring means 11 issues output to the input data processor 123, in the next step of "Measured speed counting" 42, the measured pulse is counted when the speed makes a change above a predetermined level. This corresponds to the acceleration computing means 19 and pulse width computing means 14 of FIG. 1.

Then in the step 43 of "Is predetermined time over?", a predetermined lapse time is counted and after lapsing of the predetermined time period the counted pulse number corresponding to vehicle speed is transferred to a memory (not shown, but is generally known in the CPU) in the step 44 of "Speed pulse transferring". On the other hand when the predetermined time period is not yet over, the step advances to a next step 45 of "is switch 27 set ON?", to check whether the set switch 27 is switched from ON to OFF: and when the switch 27 is switched ON, flag is set in the step 46 of "Set flag processing", and the speed at that time is set as the set speed and permit the operation of the automatic speed regulation driving.

When the set switch 27 is not changed from the ON state to OFF state, the step advances to the next step 47 of "is cancel made?" After checking the state of the cancel switch 28 in the step 48 and a cancelling is found, a cancel flag is put in the next step 48 of "cancel flag processing", thereby the electromagnetic clutch 32 of the actuator 30 and the motor 31 are deenergized, thereby immediately closing the throttle valve 40. When there is no cancelling found, the step proceed to the next step 49 of return and the process returns to the main processing of FIG. 4.

FIG. 4 shows a flow chart of the main processing when the main switch 25 shown in FIG. 2 is switched ON, the CPU 22 start its operation and the program shown in the flow chart of FIG. 4 is executed. First, in the step 52, an "initial setting" is made. In this step 52, initial setting of the data memory in the CPU, input and out instruction of the port, initial setting of the output port, and so on are executed. The aforementioned timer interruption is inhibited after completion of this step 52. Next, in the step 53 of "speed computing" the vehicle speed is computed from the number of pulse issued from the speed measuring means 11 during a predetermined time period counted by the timer interruption is computed. And then, in the next step 54 of "speed deviation computing" the deviation of measured speed from the speed set in the step 36 of the timer interruption of FIG. 3 is computed. And further in a subsequent step 54' of "acceleration computing" a difference between the present computed speed and the previous speed given by the step 44 is computed as the acceleration. Then in the step 55 of "pulse width determining", a pulse width $T_2$ of a pulse signal to be issued from the CPU 22 to drive the motor 31 is determined. And by receiving this variable width pulse signal from CPU 22, the drive output means 16 amplifies and issues a drive signal to the motor 31. By varying the pulse width $T_2$ in the following range:

$$0 < T_2 \leqq T, \qquad (1)$$

wherein $T$, is a period of the pulse signal, effective output voltage of the motor 31 can be desirably changed, and thereby the rotation speed of the motor 31 can be freely changed. Thereby, aperture of the throttle valve 18, hence forth power of the engine can be controlled.

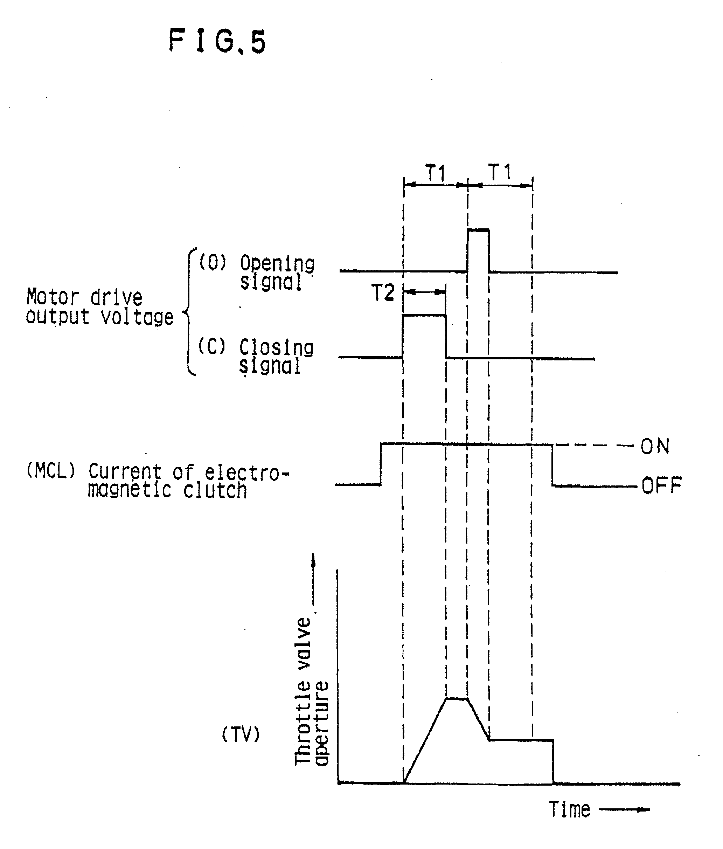

FIG. 5 shows example of controlling of the throttle valve aperture, current of electromagnetic clutch and motor drive output voltages. The pulse width $T_2$ is determined in accordance with the following equation:

$$T_2 = A \bullet \Delta V + B \bullet \Delta \alpha \qquad (2)$$

wherein,

$\Delta V$ is a deviation of measured speed from the set speed (target speed),

$\Delta \alpha$ is an acceleration computed from the measured speed,

A is a selectable constant to be selected depending on the deviation $\Delta V$ and the measured speed,

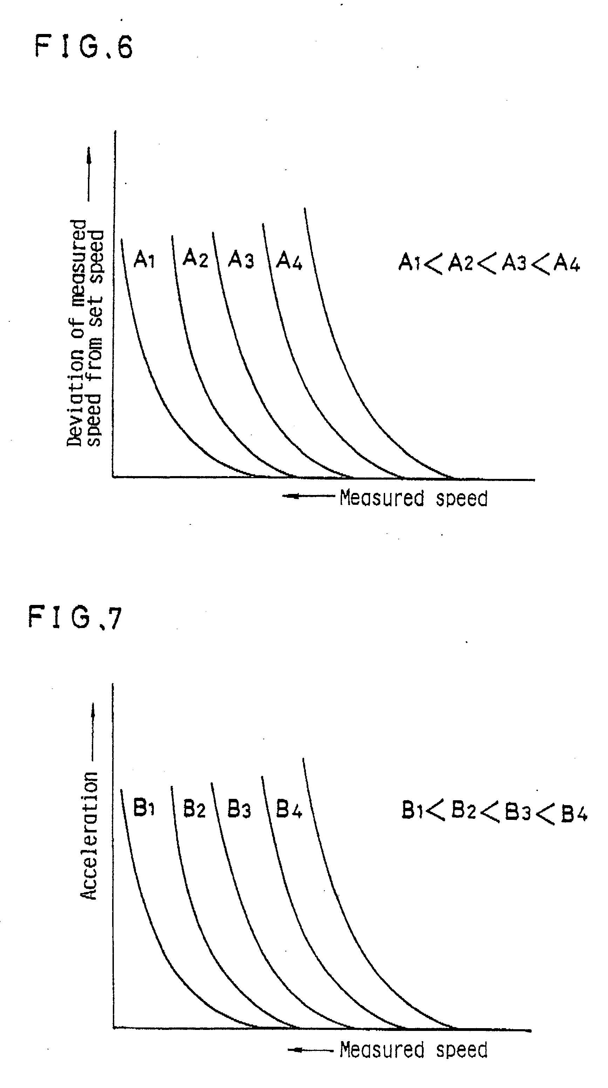

B is a selectable constant to be selected depending on the acceleration and the measured speed. That is, the pulse width $T_2$ is determined by the above-mentioned function (2) which has measured speed, deviation of measured speed and acceleration as the variables. FIG. 6 shows relations between the selectable constants A, the measured speed and the speed deviation. FIG. 7 shows one example of relation between the selectable constants B and the acceleration. In the relations of FIG. 6 and FIG. 7, the measured speed may be replaced by the set speed without substantial change of characteristic of convergence of speed, since both are not so much different. Furthermore, relation between the selectable constants A and B vs. The values $\Delta V$ and $\Delta \alpha$ can be changed as desired depending on ranges where $\Delta V$ and $\Delta \alpha$ resided. The selectable constants $A_i$ and $B_j$ (i and j are integer numeral) are selected in the relation of FIG. 6 and FIG. 7 from a ROM storing data of such curves.

Next in the step 56 of "is flag set?", the state of the set flag is checked and when the use of automatic speed regulation driving is permitted, the step advances to a next step 57 of "Is cancel flag?" and the state of the cancel flag is checked, and when the automatic speed regulation driving is not inhibited, the step advances to the next step 58 of "Actuator drive output". In this step 58, the drive output signal is given to the drive output means 16, to drive the actuator.

Then the electromagnetic clutch 32 is energized as shown by waveform MCL of FIG. 5 so as to rotate the bobbin 36 by the motor 31. Then, when the measured speed is higher than the set speed it is defined as $\Delta V < 0$; and when the automobile is decelerating, it is defined that the acceleration $\Delta \alpha$ is $\Delta \alpha < 0$. And in such state of $\Delta V < 0$ and $\Delta \alpha < 0$, when $t_2 > 0$, the bobbin 36 is driven in a direction to close the throttle valve 18 as shown in waveform (C) of FIG. 5; and when $t_2 < 0$, the bobbin 36 is rotated in a direction to open the throttle valve 18 as shown in waveform (0) of FIG. 5, with the pulse period of T. and pulse width $T_2$ determined by the step 55 of the main flow chart of FIG. 4. And when the measured speed is equal to the set speed or there is neither acceleration or deceleration, the motor 31 is disengaged while the electromagnetic clutch 32 is kept energized, thereby holding the bobbin 36 as it is to retain the aperture of the throttle 18, and the flow step returns to the step 53 (speed computing).

When the automatic speed regulation driving is inhibited in the step 57, the step advances to a step 59 of making clutch OFF, thereby to release the bobbin 36 from the motor driving gear system 35 and leaves the throttle valve 18 to the restoration spring so as to immediately restored to pedal operation. Thereafter, the step is returned to the step 53 (speed computing) of FIG. 4.

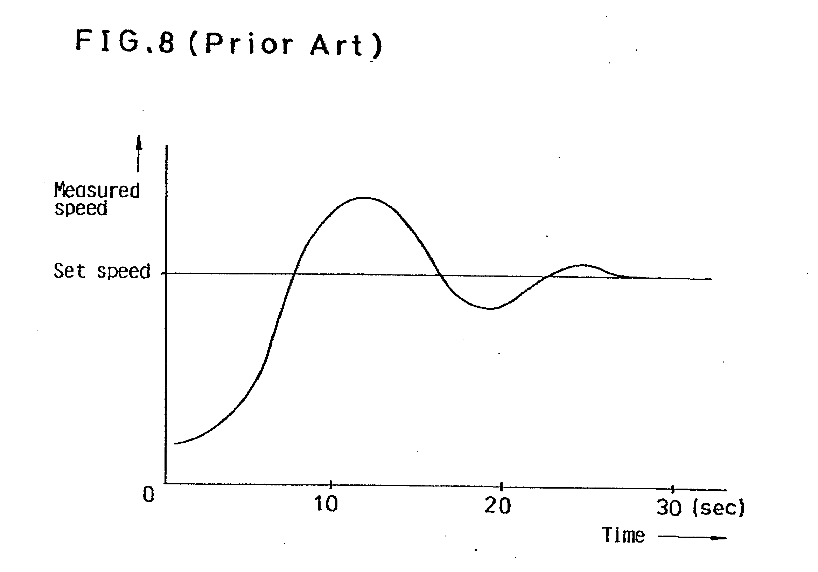

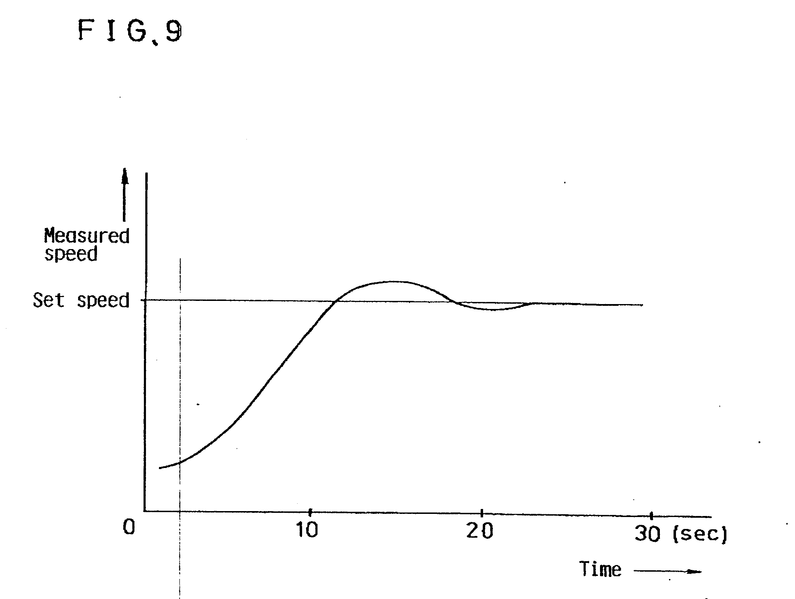

FIG. 8 and FIG. 9 show time response characteristic of the prior art automatic speed regulator and the present invention automatic speed regulator, respectively. As shown in the curve of FIG. 8, the speed regulation response of the prior art system has several times of overshooting around the set speed (target value of the automatic control), and therefore driver and passenger has an uncomfortable feeling for considerable long time. On the other hand, as a result of adopting the measured actual speed as the variable besides the speed deviation from the set speed, and the selectable constants $A_i$ and $B_j$ stored in numerical table in the ROM of the data processing part 21 are suitably selected corresponding to the speed per se and the speed deviation. Therefore, convergence of the speed control to the set speed (target value of the automatic control) is obtainable in a shorter time in comparison with the prior art. And furthermore, the overshooting around the set speed becomes very small. Accordingly the automatic speed regulation driving is fur comfortable in comparison with the case of the conventional system.

Although the invention has been described in its preferred form with a certain degreen of particularity, it is understood that the present disclosure of the preferred form has been changed in the details of construction and the combination and arrangement of parts may be resorted to without departing from the spirit and the scope of the invention as hereinafter claimed.

## Claims

1. Automatic speed regulator for automobile comprising:

speed measuring means (11) for measuring actual speed of said automobile to issue a measured speed signal,

speed setting means (12) for setting a desired target speed to which the speed regulation is to be made,

speed deviation computing means (13) for computing speed deviation which is difference between said measured speed and said target speed, to issue speed deviation signal,

pulse width computing means (14) for computing pulse width in accordance with a numerical function whereto said speed deviation signal and said measured speed signal are given as variable,

a pulse generator (15) for generating a pulse signal having said pulse width computed by said pulse width computing means (14), and

an actuator (7) for moving throttle valve aperture by receiving and responding to the output pulse signal of said pulse generator (15).

2. Automatic speed regulator for automobile comprising:

speed measuring means (11) for measuring actual speed of said automobile to issue a measured speed signal,

speed setting means (12) for setting a desired target speed to which the speed regulation is to be made,

speed deviation computing means (13) for computing speed deviation which is difference between said measured speed and said target speed, to issue speed deviation signal,

acceleration computing means (19) for computing acceleration of said automobile from comparison of the present measured speed and a previous measured speed, to issue acceleration signal

pulse width computing means (14) for computing pulse width in accordance with a numerical function whereto said speed deviation signal and said measured speed signal are given as variable,

a timing generator (15) for generating a timing signal of a predetermined period for feeding pulse signal of said pulse width, and

an actuator (7) for moving throttle valve aperture by receiving and responding to the output timing signal of said timing generator (15).

3. Automatic speed regulator in accordance with claim 1 or 2, wherein said actuator (17) comprises

a reversible rotation electric motor (31) to be drived by output timing signal of said timing generator (15),

a gear-down system (33, 34, 35) for transmitting rotation of said motor to shaft of said throttle valve (19), and

an electromagnetic clutch (32) for disconnectably connecting the mechanical transmission between said gear-down system and said throttle valve (19).

4. Automatic speed regulator in accordance with claim 1 or 2, wherein said speed measuring means comprises

a rotor coupled rotatably with a shaft of wheel and having plural magnetic poles and

pulse generating means disposed along locus of rotation said magnetic poles for generating timing pulses responding to rotation of said rotor,

5. Automatic speed regulator in accordance with claim 1 or 2, wherein said speed setting means comprises

a set switch for starting automatic speed regulation driving at a moment when the measured speed is a desired value.

6. Automatic speed regulator for automobile comprising:

speed measuring means (11) for measuring actual speed of said automobile to issue a measured speed signal,

speed setting means (12) for setting a desired target speed to which the speed regulation is to be made,

speed deviation computing means (13) for computing speed deviation which is difference between said measured speed and said target speed, to issue speed deviation signal,

pulse width computing means (14) for computing pulse width in accordance with a numerical function whereto said speed deviation signal and said measured speed signal are given as variable,

a pulse generator (15) for generating a pulse signal of a predetermined period and said pulse width computed by said pulse width computing means (14), and

an actuator (7) for moving throttle valve aperture by receiving and responding to the output pulse signal of said pulse generator (15).

7. Automatic speed regulator in accordance with claim 6, wherein said pulse width computing means (14) computes said pulse width $T_2$ which is

in a range defined by an inequity

$$0 < T_2 \leqq T,$$

where $T$, is the period of said pulse signal.

8. Automatic speed regulator in accordance with claim 6, wherein said pulse width computing means (14) computes said pulse width $T_2$ by a numerical function:

$$T_2 = A \bullet \Delta V + B \bullet \Delta \alpha \qquad (2)$$

wherein,

$\Delta V$ is a deviation of measured speed from the set speed (target speed),

$\Delta \alpha$ is an acceleration computed from the measured speed,

A is a constant determined by the deviation $\Delta V$ and the measured speed,

B is a constant determined by the acceleration and the measured speed.

9. Automatic speed regulator in accordance with claim 6, wherein said actuator comprises an electric motor which changes rotation speed responding to said pulse width, thereby to change rate of aperture change of the throttle valve per unit time.

# F I G.1

Data processing part (21)

- Speed measuring means (11)
- Speed setting means (12)
- Acceleration computing means (19)
- Speed deviation computing means (13)
- Pulse width computing means (14)
- Pulse generator (15)
- Drive output means (16)
- Actuator (17)

ms, ac, ds

18

0 276 728

# F I G. 2

Speed measuring means

Speed setting means

Data processing part

Input data processor

ROM

CPU

Drive output means

Motor

Actuator

0 276 728

## FIG. 3
## (Timer Interruption)

```
          ( Interruption )  ⌐41
                |
    ┌─────────────────────────┐
    │  Measured speed counting │  ⌐42
    └─────────────────────────┘
                |
         ◇ Is predetermined      ⌐43
    No   ◇ time period over? ◇
    ←────◇                  ◇
         │      Yes
    ┌─────────────────────────┐
    │ Speed pulse transferring │  ⌐44
    └─────────────────────────┘
                |
         ◇ Is switch 27         ⌐45
    No   ◇ set ON?       ◇
    ←────◇              ◇
         │      Yes
    ┌─────────────────────────┐
    │   Set flag processing    │  ⌐46
    └─────────────────────────┘
                |
         ◇ Is cancel switch     ⌐47
    No   ◇ 28 ON?        ◇
    ←────◇              ◇
         │      Yes
    ┌─────────────────────────┐
    │  Cancel flag processing  │  ⌐48
    └─────────────────────────┘
                |
          (   Return   )  ⌐49
```

# FIG.4
## (Main Flow)

```
        ╭──────────────╮ ⌒51
        │   Power ON   │
        ╰──────┬───────╯
               ↓
        ┌──────────────┐ ⌒52
        │Initial setting│
        └──────┬───────┘
   ┌──────────→│
   │           ↓
   │    ┌──────────────┐ ⌒53
   │    │Speed computing│
   │    └──────┬───────┘
   │           ↓
   │    ┌──────────────┐ ⌒54
   │    │Speed deviation│
   │    │  computing    │
   │    └──────┬───────┘
   │           ↓
   │    ┌──────────────┐ ⌒54'
   │    │ Acceleration  │
   │    │  computing    │
   │    └──────┬───────┘
   │           ↓
   │    ┌──────────────┐ ⌒55
   │    │ Pulse width   │
   │    │ determining   │
   │    └──────┬───────┘
   │           ↓
   │        ◇⌒56
   │  No ╱Is set flag╲
   ├────┤    set?      │
   │     ╲           ╱
   │        ◇
   │        │Yes
   │        ↓        ⌒57
   │       ╱Is cancel╲   Yes     ┌──────────────┐ ⌒59
   │      ┤ flag set? ├─────────→│Making clutch OFF│
   │       ╲         ╱           └───────┬──────┘
   │         ◇                           │
   │         │No ⌒58                     │
   │    ┌──────────────┐                 │
   │    │Actuator drive │                │
   │    │  output       │                │
   │    └──────┬───────┘                 │
   └───────────┴─────────────────────────┘
```

# FIG.5

0 276 728

FIG.6

Deviation of measured speed from set speed — (vertical axis)

A1  A2  A3  A4     A1 < A2 < A3 < A4

— Measured speed

FIG.7

Acceleration — (vertical axis)

B1  B2  B3  B4     B1 < B2 < B3 < B4

— Measured speed

## FIG.8 (Prior Art)

# F I G.9